Europäisches Patentamt

European Patent Office

Office européen des brevets

(19)

(11) Veröffentlichungsnummer: **0 005 448**
**A1**

(12) # EUROPÄISCHE PATENTANMELDUNG

(21) Anmeldenummer: **79101081.2**

(22) Anmeldetag: **09.04.79**

(51) Int. Cl.²: **A 47 J 31/54**
**A 47 J 31/057**

(30) Priorität: **19.05.78 DE 2821878**

(43) Veröffentlichungstag der Anmeldung:
**28.11.79** Patentblatt **79/24**

(84) Benannte Vertragsstaaten:
**FR GB NL SE**

(71) Anmelder: **Assion GmbH**
**Schwabenstrasse 91**
**D-7036 Schönaich(DE)**

(72) Erfinder: **Assion, Norbert**
**Schwabenstrasse 91**
**D-7036 Schönaich(DE)**

(74) Vertreter: **Schiering, Rudolf, Dr.-Ing. et al,**
**Patentanwälte Schiering & Schiering Westerwaldweg 4**
**D-7030 Böblingen(DE)**

(54) **Kaffeemaschine.**

(57) Bei einer Kaffeemaschine mit Steigrohr (32) und Flachheizkörper ist der Flachheizkörper aus einer sein elektrisches Heizelement (12) rundum überragenden Kochscheibe (10) und einer Bodenscheibe (11) hoher Wärmeleitfähigkeit zusammengesetzt und von einem seinen Rand umgreifenden elastischen Dichtungsring (19) gehalten. Damit wird die Heizenergie in verstärktem Maße gegen das Zentrum des an die Oberseite des Flachheizkörpers (10, 11) angrenzenden Kochraums (20) gelenkt und der an den Rand des Flachheizkörpers (10, 11) angrenzende Bereich des Kaffeemaschinengehäuses (29) vor größerer Erwärmung geschützt, so daß eine kostengünstig herstellbare Eintassen-Kaffeemaschine mit einem knapp dimensionierten Kaffeemaschinengehäuse aus Kunststoff realisierbar ist.

FIG. 1

EP 0 005 448 A1

## Kaffeemaschine

Die Erfindung bezieht sich auf eine Kaffeemaschine mit einem ein elektrisches Heizelement enthaltenden Flachheizkörper, einem an die Oberseite des Flachheizkörpers angrenzenden Kochraum, einem in den Kochraum führenden Kaltwasserzulauf und einem vom Kochraum zu einem Filterbecher führenden Steigrohr für das mit Dampfblasen durchsetzte erhitzte Wasser.

Es sind bereits Kaffeemaschinen dieser Art bekannt, bei denen ein mäanderförmig in einer Ebene verlaufender elektrischer Widerstandsdraht vorgesehen ist. Gegenüber Kaffeemaschinen mit einer das Steigrohr umgebenden Heizwendel wird damit der Platzbedarf der Heizung verringert und zugleich der Wirkungsgrad der Wassererhitzung verbessert. Beides ist erforderlich, wenn eine Kaffeemaschine eine kleine Bauform haben und die Einbettung des elektrischen Heizelements mit einfachen Mitteln erfolgen soll, um die Herstellungskosten der Kaffeemaschine niedrig zu halten. Für besonders kostengünstig herstellbare Kaffeemaschinen reichen die eingangs angeführten bekannten Merkmale jedoch allein nicht aus. Das Problem besteht vor allem darin, ein wärmemäßig entlastetes knapp dimensioniertes Kaffeemaschinengehäuse aus Kunststoff vorzusehen und bei einer möglichst niedrigen Heizleistung des elektrischen Heizelements in einer vertretbaren Zeitspanne die Wassermenge für eine Tasse Kaffee in den Filterbecher zu überführen.

Der Erfindung liegt die Aufgabe zugrunde, bei einer Kaffeemaschine der eingangs angeführten Art über einen verbesserten Wirkungsgrad der Wassererhitzung mit wenigen kostengünstig herstellbaren und einfach zu montierenden Bauteilen auszukommen.

Diese Aufgabe wird erfindungsgemäß dadurch gelöst, daß der Flachheizkörper aus einer das elektrische Heizelement rundum überragenden Kochscheibe und einer Bodenscheibe hoher Wärmeleitfähigkeit zusammengesetzt und von einem seinen Rand umgreifenden elastischen Dichtungsring gehalten ist, wobei das elektrische Heizelement in einer zentralen Vertiefung untergebracht ist, während die Randzone der Bodenscheibe an der Kochscheibe anliegt.

Damit wird einerseits die Heizenergie in verstärktem Maße gegen das Zentrum des Kochraums gelenkt und andererseits der Wärmefluß zu den Randbereichen des Kochraums gefördert. Außerdem kann der Flachheizkörper an seinem Rand so eingefaßt werden, daß angrenzende Bereiche des Kaffeemaschinengehäuses vor größerer Erwärmung geschützt sind. Mit der Erfindung erzielte Vorteile sind aber insbesondere auch darin zu sehen, daß selbst der Flachheizkörper nur aus wenigen kostengünstig herstellbaren und einfach zu montierenden Bauteilen besteht.

Ein aufgrund der in den Unteransprüchen angegebenen Erfindungsausgestaltungen besonders bevorzugtes Ausführungsbeispiel der Erfindung ist in der Zeichnung dargestellt und wird im folgenden näher beschrieben. Es zeigt

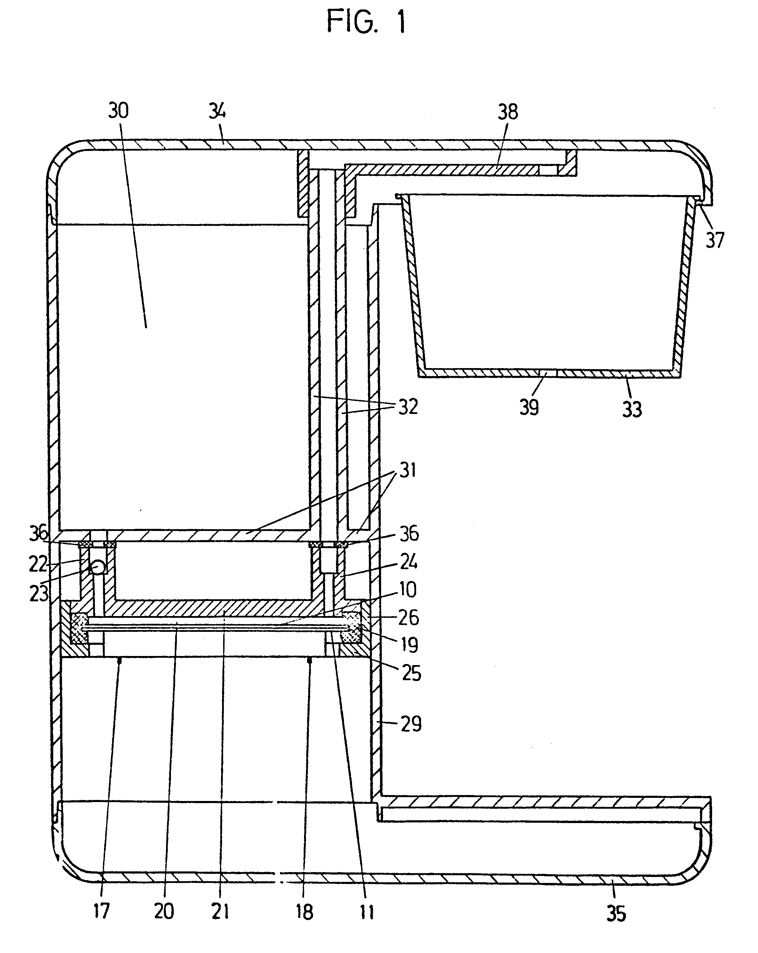

Fig. 1    einen Vertikalschnitt der beschriebenen Kaffeemaschine,

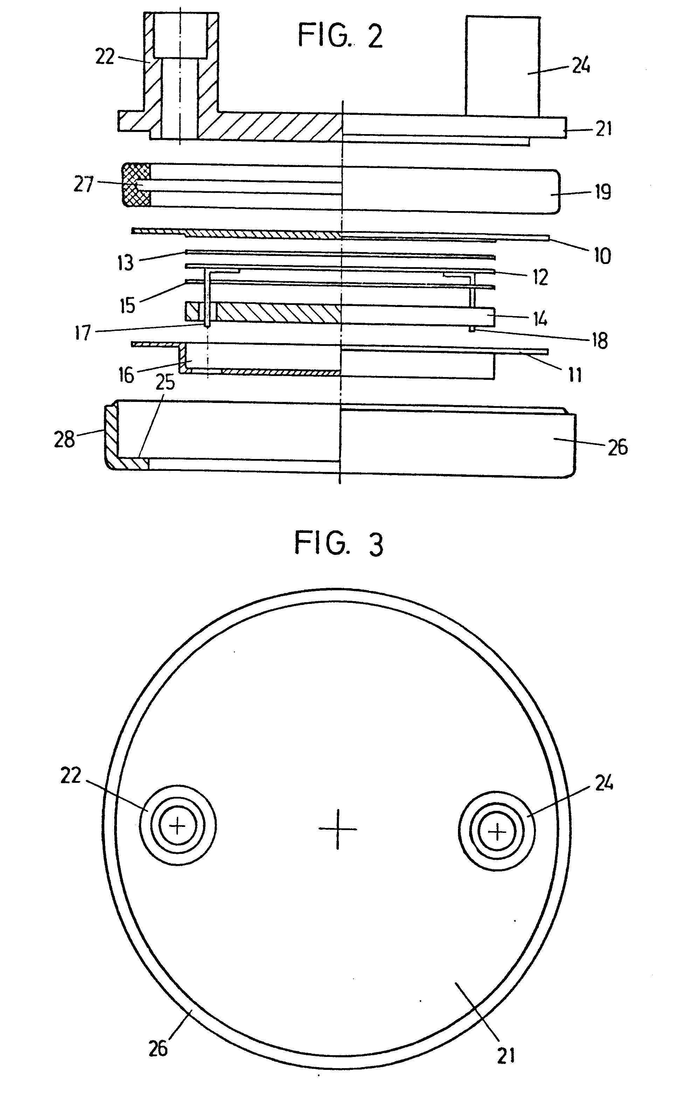

Fig. 2    eine Explosivdarstellung des Wassererhitzers der Kaffeemaschine in Fig. 1 und

Fig. 3    die Draufsicht auf den Wassererhitzer in Fig. 2.

Bei der in der Zeichnung wiedergegebenen Kaffeemaschine ist zwischen der Kochscheibe 10 und der Bodenscheibe 11 des Flachheizkörpers ein elektrisches Heizelement 12 temperaturabhängiger Stromaufnahme eingebettet, das einen Thermostaten und eine Überhitzungs-Schmelzsicherung überflüssig macht. Zur elektrischen Isolierung ist zwischen dem Heizelement 12 und der Kochscheibe 10 eine erste Glimmereinlage 13 und zwischen dem Heizelement 12 und dem Wärmeisolator 14 eine zweite Glimmereinlage 15 vorgesehen. Der Wärmeisolator 14 besteht aus Asbest und nimmt in der zentralen Vertiefung 16 der Bodenscheibe 11 den meisten Raum in Anspruch. Die beiden Anschlußkontakte 17 und 18 des elektrischen Heizelements 12 sind durch die Glimmereinlage 15, den Wärmeisolator 14 und die Bodenscheibe 11 nach unten herausgeführt.

Die Kochscheibe 10 und die Bodenscheibe 11 des Flachheizkörpers sind von einem ihre Ränder umgreifenden elastischen Dichtungsring 19 zusammengehalten, was den Zusammenbau des Flachheizkörpers wesentlich vereinfacht. Als Dichtungsmaterial ist Silikon verwendet, das sich durch eine große Wärmebeständigkeit auszeichnet. Um beim Wassererhitzer der Kaffeemaschine mit wenigen kostengünstig herstellbaren und einfach zu montierenden Bauteilen auszukommen, ist die Seitenwand des an die Oberseite des Flachheizkörpers angrenzenden Kochraums 20 vom die Kochscheibe 10 und die Bodenscheibe 11 des Flachheizkörpers zusammenhaltenden Dichtungsring 19 gebildet.

Dadurch, daß der an die Oberseite des Flachheizkörpers angrenzende Kochraum 20 einen auf dem Dichtungsring 19 aufliegenden Kochraumdeckel 21 hat, läßt sich die Kochraumhöhe auf etwa einen Millimeter vermindern und damit ein Kleindampferzeuger besonders hohen Wirkungsgrades realisieren, der Anlauf der Dampferzeugung beschleunigen, das seitliche Abfließen von Verlustwärme noch stärker begrenzen und letztlich auch der Herstellungspreis der Kaffeemaschine weiter senken. Der in den Kochraum 20 führende Kaltwasserzulauf 22 besteht aus einem von der Oberseite des Kochraumdeckels 21 in stark exzentrischer Anordnung aufragenden Hohlstutzen. In ihm ist ein Rücklauf-Sperrventil 23 eingefügt. Mit Ausnahme dieses Rücklauf-Sperrventils 23 ist zentralsymmetrisch dazu noch ein als Heißwasserauslaß 24 dienender zweiter Hohlstutzen vorgesehen.

Zur leichteren Montierbarkeit der Kaffeemaschine trägt auch bei, daß der Kochraumdeckel 21 in einer mit einem Stützlager 25 für die Unterseite des Dichtungsrings 19 versehenen Fassung 26 gehalten ist. Der die Kochscheibe 10 und die Bodenscheibe 11 zusammenhaltende Dichtungsring 19 wird in die oben offene Fassung 26 eingelegt und dann mit Hilfe des Kochraumdeckels 21 zusammengedrückt. Da der Dichtungsring 19 ein Rechteckprofil mit Innenkerbe 27 besitzt und jeweils breitflächig an der Fassung 26, dem Stützlager 25 und dem Kochraumdeckel 21 anliegt, wird mit einem einzigen Bauteil zugleich der Kochraum 20 und der aus Kochscheibe 10 und Bodenscheibe 11 zusammengesetzte Flachheizkörper abgedichtet und außerdem noch die Lage des Flachheizkörpers gesichert. Der Kochraumdeckel 21 und die Fassung 26 sind als Kunststoffteile ausgebildet, so daß beide auf einfache Weise durch Ultraschallschweißung dauerhaft miteinander verbunden werden können. Daneben hat Kunststoff die vorteilhafte Eigenschaft, keinen Kalk anzulagern.

Weitere Fortschritte in der Zielsetzung, bei der Kaffeemaschine mit wenigen kostengünstig herstellbaren und einfach zu montierenden Bauteilen auszukommen, werden schließlich dadurch erzielt, daß die den Flachheizkörper 10-11, den Kochraum 20 und den Kochraumdeckel 21 enthaltende Fassung 26 mit einer kreiszylindrischen Mantelfläche 28 an der Innenwand eines rohrförmigen Vertikalteils 29 des Kaffeemaschinengehäuses unter einem den Boden eines Kaltwasserbehälters 30 bildenden Zwischenboden 31 mit angeformten Steigrohr 32 anliegt und das rohrförmige Vertikalteil 29 des Kaffeemaschinengehäuses am oberen Ende von einem den Filterbecher 33 tragenden Gehäusedeckel 34 und am unteren Ende von einem mit dem Gehäusedeckel 34 baugleichen Fußteil 35 verschlossen ist. Als Material ist für das Kaffeemaschinengehäuse ausnahmslos Kunststoff vorgesehen. Am Übergang vom Kaltwasserbehälter 30 zum Kaltwasserzulauf 22 des Kochraums 20 und am Übergang vom Steigrohr 32 zum Heißwasserauslaß 24 des Kochraums 20 ist je eine Dichtung 36 eingefügt. Lötarbeiten sind gänzlich vermieden..

Mit der in der Zeichnung wiedergegebenen Kaffeemaschine wird jeweils Kaffee für eine einzige Tasse aufgebrüht. Das in dieser Tasse herbeigeschaffte frische Wasser wird nach Abheben des Gehäusedeckels 34 in den Kaltwasserbehälter 30 geschüttet. An den wieder geschlossenen Gehäusedeckel 34 wird mit Hilfe eines Bajonettverschlusses 37 der Filterpapier und Kaffeepulver enthaltende Filterbecher 33 angesetzt. Die geleerte Tasse wird unter dem Filterbecher aufgestellt. Danach wird das elektrische Heizelement 12 über einen in der Zeichnung weggelassenen Schalter an Netzspannung gelegt. Das im Kochraum 20 erhitzte Wasser steigt unter der Wirkung sich bildender Dampfblasen das Steigrohr 32 empor und wird mit Hilfe des sich anschließenden Überlaufs 38 über der Mitte des Filterbechers 33 abgetropft. Der trinkfertige Kaffee tropft seinerseits aus einer mittigen Auslaßöffnung 39 des Filterbechers 33 ab.

Patentansprüche

1. Kaffeemaschine mit einem ein elektrisches Heizelement enthaltenden Flachheizkörper, einem an die Oberseite des Flachheizkörpers angrenzenden Kochraum, einem in den Kochraum führenden Kaltwasserzulauf und einem vom Kochraum zu einem Filterbecher führenden Steigrohr für das mit Dampfblasen durchsetzte erhitzte Wasser, dadurch gekennzeichnet, daß der Flachheizkörper aus einer das elektrische Heizelement (12) rundum überragenden Kochscheibe (10) und einer Bodenscheibe (11) hoher Wärmeleitfähigkeit zusammengesetzt und von einem seinen Rand umgreifenden elastischen Dichtungsring (19) gehalten ist, wobei das elektrische Heizelement (12) in einer zentralen Vertiefung (16) untergebracht ist, während die Randzone der Bodenscheibe (11) an der Kochscheibe (10) anliegt.

2. Kaffeemaschine nach Anspruch 1, dadurch gekennzeichnet, daß das elektrische Heizelement (12) unten von einem Wärmeisolator (14) abgedeckt ist.

3. Kaffeemaschine nach Anspruch 2, dadurch gekennzeichnet, daß die Seitenwand des an die Oberseite des Flachheizkörpers angrenzenden Kochraums (20) vom die Kochscheibe (10) und die Bodenscheibe (11) des Flachheizkörpers zusammenhaltenden Dichtungsring (19) gebildet ist.

4. Kaffeemaschine nach Anspruch 3, dadurch gekennzeichnet, daß der an die Oberseite des Flachheizkörpers angrenzende Kochraum (20) einen auf dem Dichtungsring (19) aufliegenden Kochraumdeckel (21) hat.

5. Kaffeemaschine nach Anspruch 4, dadurch gekennzeichnet, daß der Kochraumdeckel (21) in einer mit einem Stützlager (25) für die Unterseite des Dichtungsrings (19) versehenen Fassung (26) gehalten ist.

6. Kaffeemaschine nach Anspruch 5, dadurch gekennzeichnet, daß der Dichtungsring (19) ein Rechteckprofil mit Innenkerbe (27) besitzt und jeweils breitflächig an der Fassung (26), dem Stützlager (25) und dem Kochraumdeckel (21) anliegt.

7. Kaffeemaschine nach einem der Ansprüche 4 bis 6, dadurch gekennzeichnet, daß der Kochraumdeckel (21) und die Fassung (26) als Kunststoffteile ausgebildet sind.

8. Kaffeemaschine nach Anspruch 7, dadurch gekennzeichnet, daß die den Flachheizkörper (10,11), den Kochraum (20) und den Kochraumdeckel (21) enthaltende Fassung (26) mit einer kreiszylindrischen Mantelfläche (28) an der Innenwand eines rohrförmigen Vertikalteils (29) des Kaffeemaschinengehäuses unter einem den Boden eines Kaltwasserbehälters (30) bildenden Zwischenboden (31) mit angeformten Steigrohr (32) anliegt und das rohrförmige Vertikalteil (29) des Kaffeemaschinengehäuses am oberen Ende von einem den Filterbecher (33) tragenden Gehäusedeckel (34) und am unteren Ende von einem mit dem Gehäusedeckel (34) baugleichen Fußteil (35) verschlossen ist.

0005448

## FIG. 1

FIG. 2

FIG. 3

**Europäisches Patentamt**

# EUROPÄISCHER RECHERCHENBERICHT

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | A 47 J 31/54 31/057 |
| A | US - A - 2 658 134 (KIRCHNER) * Spalten 2,3; Figur 2 * | 1,2 | |
| | -- | | |
| A | GB - A - 747 062 (G.E. COMP.) * Das ganze Dokument * | 1,2 | |
| | -- | | |
| A | US - A - 1 459 408 (LOCKETT) * Figur 1 * | 1 | |
| | -- | | **RECHERCHIERTE SACHGEBIETE (Int. Cl.²)** |
| A | US - A - 3 714 395 (HUMMEL) * Figuren 2,4 * | 1,2 | A 47 J |
| | ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28-08-1979 | SCHARTZ |

EPA form 1503.1  06.78